# EUROPEAN PATENT APPLICATION

(11) **EP 2 119 676 A1**
(43) Date of publication of application: **18.11.2009**
(21) Application number: 09160310.0
(22) Date of filing: 14.05.2009
(51) Int. Cl.: C02F 1/76, C02F 1/78, B63B 29/16

(54) **Method and apparatus for purifying waste water**

(30) Priority: 15.05.2008 IT PR20080034
(71) Applicant: NINE S.r.l., 16030 Casarza Ligure (GE) (IT)
(72) Inventor: Diano, Mario, 16030, Casarza Ligure (GENOVA) (IT)
(74) Representative: Gotra, Stefano

(57) **Abstract**

Method for purifying waste water (2), comprising the steps of:
- introducing the waste water (2) into a tank (5);
- diluting the waste water (2) by adding sea water (2bis) or freshwater into the tank (5);
- introducing chlorine into the waste water (2);
- carrying out a first recirculation of the waste water (2) charged with chlorine,
characterised in that it comprises the steps of:
- introducing ozone into the waste water (2) following the first recirculation process;
- carrying out a second recirculation of the waste water (2) charged with ozone;
- discharging the purified waste water (2) from the tank (5).

## Description

The present invention relates to a method and apparatus for purifying waste water, to be used on pleasure yachts and commercial vessels or else in the civil and hotel sectors.

Waste or "dirty" water is the definition given to water contaminated by waste products of human activities, including physiological activity (deriving from metabolism) and work-related activities (farming, breeding, industry). The contaminants present in waste water, be they of an organic or inorganic nature, may be severely harmful to man, animals and plants. In fact, waste water usually contains bacteria, viruses, fungi, algae, oils and greasy substances, as well as heavy metals. For this reason, waste water must undergo suitable purification treatments before being disposed of in the soil, in watercourses or in the sea.

There are known waste water purification systems which comprise a series of stages corresponding to specific mechanical, physicochemical or biological actions on the water itself. Irrespective of the type of purification system, a step involving the introduction of chlorine (generally in the form of sodium hypochlorite) is nearly always present. This step has the primary aim of sanitising the water by reducing the bacterial count.

A first disadvantage of the known art lies in the necessity of introducing a large quantity of chlorine to improve the purification of the waste water. However, the quantity of chlorine introduced must not exceed a certain safety threshold, above which damage may be caused to the digestive system.

Furthermore, the presence of excessive quantities of chlorine imparts an unpleasant flavour and odour to the water. This is particularly undesirable in civil applications, as in the case of swimming pool purification systems or use in showers and dishwashers. The object of the present invention is to provide a method and an apparatus for purifying waste water in such a way that it is possible to improve the quality of purification while limiting the quantity of chlorine introduced into such water.

Another object of the present invention is to propose a method and an apparatus for purifying waste water such as to reduce the unpleasant flavours and odours caused by chlorine.

Another object of the present invention is to provide a method and an apparatus for purifying waste water in such a way that it is possible to reduce the time necessary to complete the purification process.

Said objects are achieved in full by the method and apparatus for purifying waste water of the present invention, which comprise the characteristics contained in claim 1 and in the subsequent claims. These and other objects will become more apparent from the following description of a preferred embodiment, illustrated solely by way of non-restrictive example in the appended drawings, in which:
- figure 1 illustrates a block diagram of an apparatus for purifying waste water according to the present invention;
- figure 2 illustrates a block diagram of the apparatus of figure 1, according to a different embodiment.

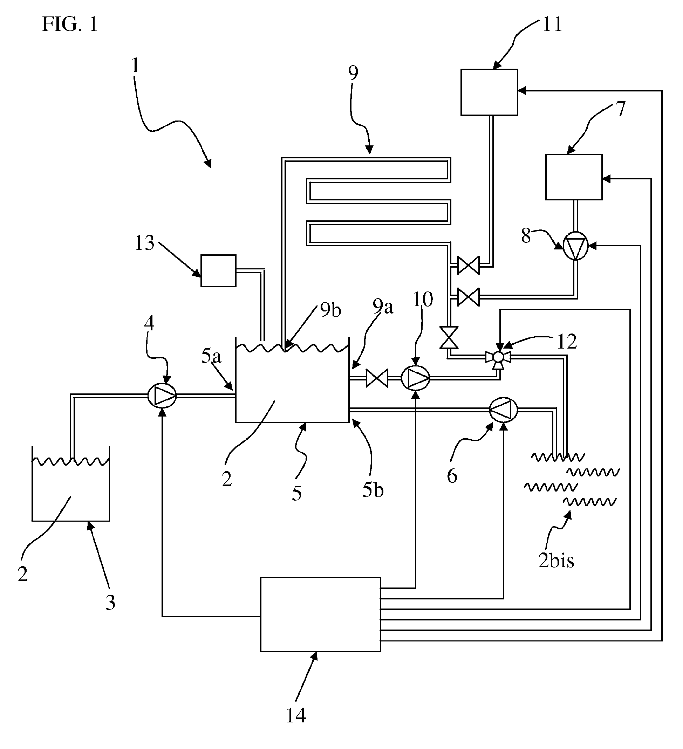

With reference to the figures, 1 indicates an apparatus for purifying waste water 2, in particular for use on vessels. In the embodiment illustrated in figure 1, the waste water 2 is drawn from a storage reservoir 3 by means of a first pump 4. This waste water 2 is transferred to a tank 5 through a first inlet 5a.

Preferably, the waste water 2 contained in the tank 5 is diluted with sea water 2bis or freshwater. For example, the sea water 2bis is conveyed to the tank 5 by a second pump 6 and introduced into the tank 5 itself through a second inlet 5b.

Advantageously, the waste water 2 has chlorine added to it. Preferably, the chlorine is introduced in the form of sodium hypochlorite 13% in C12. The chlorine is drawn from a container 7 by means of a third pump 8 and transferred to the tank 5 through a conduit 9 situated outside the tank 5 itself.

Preferably, the waste water 2 charged with chlorine is submitted to a first recirculation process wherein it undergoes a sequence of actions that are cyclically repeated for a total duration of at least sixty minutes. In particular, the recirculation process involves the tank 5 and the conduit 9. Said conduit 9, preferably having the form of a serpentine coil, is provided with an inlet 9a and an outlet 9b, both connected to the tank 5. In particular, a fourth pump 10 is present for drawing the waste water 2 out of the tank 5 through the inlet 9a of the conduit 9. The waste water 2 flows in the conduit 9 and arrives at the outlet 9b of said conduit 9, from there flowing back into the tank 5.

On completion of the first recirculation process, innovatively, ozone is introduced into the waste water 2. This ozone is produced by an ozone generator 11 communicating with the conduit 9. The ozone is transferred from the ozone generator 11 to the conduit 9 and then made to collide with the waste water 2 present in the tank 5. Preferably, the pressure of the ozone inside the conduit 9 is in the range of 0.5 bar to 1 bar.

Advantageously, the waste water 2 charged with ozone is submitted to a second recirculation process. This second recirculation is carried out exploiting the conduit 9 previously used for the first recirculation. Indeed, during the second recirculation process, the waste water 2 undergoes a sequence of actions that are cyclically repeated for a total duration of at least thirty minutes. The fourth pump 10 draws the waste water 2 charged with ozone from the tank 5 through the inlet 9a of the conduit 9. This waste water 2 flows in the conduit 9 and arrives at the outlet 9b of said conduit 9, from there flowing back into the tank 5.

On completion of the second recirculation process, the purified waste water 2 can be discharged into the sea (or into other watercourses, or into the soil, depending on the application). The fourth pump 10 draws the purified waste water 2 from the tank 5 and transfers it into the sea by means of a diverter valve 12.

Advantageously, the apparatus 1 is provided with an activated carbon filter 13 connected to the tank 5 so as to filter the air leaving the tank 5 during the transfer of the waste water 2 into the tank 5 itself, in order to reduce the unpleasant odour due to the waste water 2.

The apparatus 1 is moreover equipped with a control unit 14, which controls the operation of the pumps 4, 6, 8, 10, the container 7 of chlorine, the ozone generator 11 and the diverter valve 12.

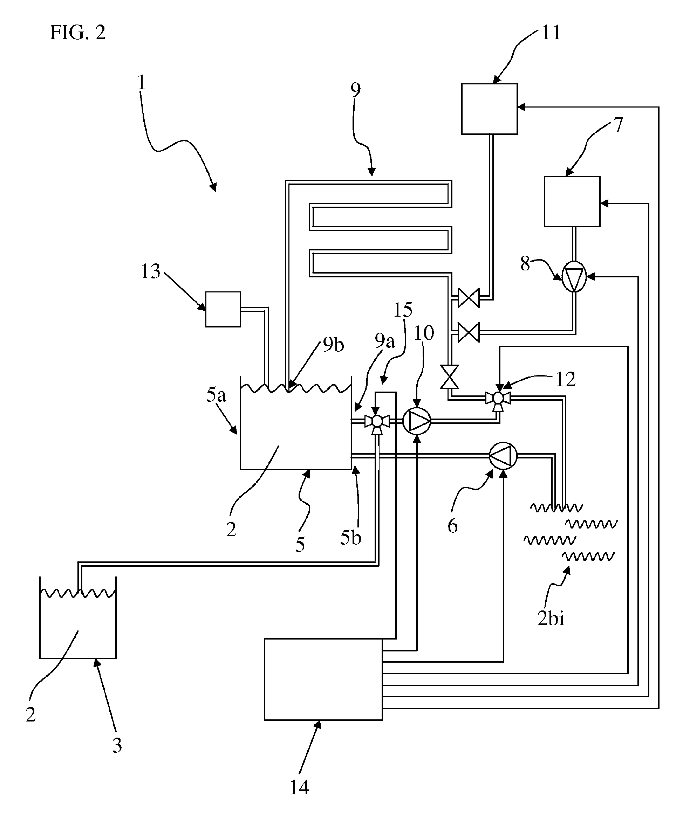

In the embodiment illustrated in figure 2, the first pump 4 is not present. In that case, there is a further diverter valve 15 which, in response to a relative command coming from the control unit 14, activates the fourth pump 10 in such a way that it draws the waste water 2 from the storage reservoir 3. Said waste water 2 is transferred to the tank 5 through its first inlet 5a.

The functioning of the apparatus for purifying waste water according to the present invention is substantially as follows.

In applications on vessels, the waste water 2 is transferred from the storage reservoir 3 to the tank 5 and diluted with sea water 2bis or freshwater. Chlorine is subsequently introduced into the waste water 2 and the waste water 2 thus charged with chlorine is submitted to a first recirculation process. Afterwards, the waste water 2 is charged with ozone and submitted to a second recirculation process. At the end of the second recirculation, the waste water 2 is purified and can be released into the sea.

The complete cycle described involves the purification of a total of 55 litres of water for a total duration of at least ninety minutes, that is, sixty minutes for the first recirculation and thirty minutes for the second recirculation.

The characteristics of the apparatus and method for purifying waste water emerge clearly from the description provided, as do the advantages thereof.

In particular, the waste water can be discharged into the sea without any problems because the quantity of chlorine is advantageously reduced by the ozone. Indeed, the ozone performs a substantially neutralising action on the chlorine, which in large quantities would prove harmful to living beings.

Furthermore, the ozone contributes to reducing detergent phosphates, often present in domestic waste water.

In addition, unlike chlorine, ozone is flavourless and odourless and hence improves the quality of waste water purification.

Finally, the method proposed provides an advantage in terms of time. Traditional systems, which envisage only the step of charging and recirculating with chlorine, purify 55 litres of water in two hours. By introducing the step of charging and recirculating with ozone, it is possible to purify waste water in ninety minutes.

Finally, it must be noticed that only three pumps are employed in the embodiment illustrated in figure 2, thus optimizing the overall dimensions of the apparatus.

## Claims

1. Method for purifying waste water (2), comprising the steps of:
- introducing the waste water (2) into a tank (5);
- diluting the waste water (2) by adding sea water (2bis) or freshwater into the tank (5);
- introducing chlorine into the waste water (2);
- carrying out a first recirculation of the waste water (2) charged with chlorine,
**characterised in that** it comprises the steps of:
- introducing ozone into the waste water (2), following the first recirculation process;
- carrying out a second recirculation of the waste water (2) charged with ozone;
- discharging the purified waste water (2) from the tank (5).

2. Method according to claim 1, **characterised in that** the step of introducing the waste water (2) into the tank (5) includes the sub-steps of drawing said waste water (2) from a storage reservoir (3) by means of a first pump (4) and transferring said waste water (2) from the storage reservoir (3) to the tank (5).

3. Method according to claim 1, **characterised in that** the step of diluting the waste water (2) includes the sub-steps of drawing sea water (2bis) or freshwater by means of a second pump (6) and transferring said water to the tank (5).

4. Method according to claim 1, **characterised in that** the step of introducing chlorine into the waste water (2) includes the sub-steps of drawing the chlorine from a container (7) by means of a third pump (8) and transferring the chlorine to the tank (5) through a conduit (9) situated outside the tank (5) itself.

5. Method according to claim 1, **characterised in that** the step of carrying out the first recirculation of the waste water (2) includes the sub-steps of drawing the waste water (2) charged with chlorine from the tank (5) by means of a fourth pump (10), circulating said waste water (2) in a conduit (9) and introducing the waste water (2) back into the tank (5).

6. Method according to claim 5, **characterised in that** the sub-steps of the first recirculation process are sequentially repeated in a cyclical manner for a total duration of at least sixty minutes.

7. Method according to claim 1, **characterised in that** the step of introducing ozone into the waste water (2) includes the sub-steps of transferring the ozone from an ozone generator (11) to a conduit (9) and causing the ozone to collide with the waste water (2) present in the tank (5).

8. Method according to claim 1, **characterised in that** the step of carrying out the second recirculation process of the waste water (2) includes the sub-steps of drawing the waste water (2) charged with ozone from the tank (5) by means of a fourth pump (10), circulating said waste water (2) in a conduit (9) and introducing the waste water (2) back into the tank (5).

9. Method according to claim 8, **characterised in that** the sub-steps of the second recirculation process are sequentially repeated in a cyclical manner for a total duration of at least thirty minutes.

10. Method according to claim 1, **characterised in that** the step of discharging the purified waste water (2) from the tank (5) includes the sub-steps of drawing the purified waste water (2) from the tank (5) by means of a fourth pump (10) and transferring it into the sea by means of a diverter valve (12).

11. Method according to claim 1, **characterised in that** it further comprises a step of filtering the air leaving the tank (5) by means of an activated carbon filter (13).

12. Apparatus (1) for purifying waste water (2), comprising:
- a tank (5) containing the waste water (2);
- a conduit (9) having an inlet (9a) and an outlet (9b), said inlet (9a) and said outlet (9b) being connected to the tank (5) for recirculating the waste water (2);
- a container (7) of chlorine communicating with the conduit (9) for the purpose of introducing chlorine into the waste water (2),
**characterised in that** it comprises:
- an ozone generator (11) communicating with the conduit (9) for the purpose of introducing ozone into the waste water (2).

13. Apparatus (1) according to claim 12, **characterised in that** the ozone generator (11) produces ozone at a pressure ranging between 0.5 bar and 1 bar.

14. Apparatus (1) according to claim 12 or 13, **characterised in that** it further comprises an activated carbon filter (13) connected to the tank (5) to filter the air leaving the tank (5).
